# EUROPEAN PATENT APPLICATION

(11) **EP 1 739 539 A2**
(43) Date of publication of application: **03.01.2007**
(21) Application number: 06114415.0
(22) Date of filing: 23.05.2006
(51) Int. Cl.: G06F 3/12

(54) **Integration of local and remote jobs in the job queue**

(30) Priority: 20.06.2005 US 155659
(71) Applicant: Xerox Corporation, Rochester, New York 14644 (US)
(72) Inventor: Sorrentino, Daniel G., Avon, NY 14414 (US)
(74) Representative: Grünecker, Kinkeldey, Stockmair & Schwanhäusser Anwaltssozietät

(57) **Abstract**

A method, system service, and computer program for handling status of remote jobs associated with a networked device provides a job queue that presents job status for jobs that are being processed both locally (i.e. within) and remotely (i.e. externally) from the device. A method for handling status of remote jobs in a device comprises providing a job queue operable to include information on local jobs processed in the local device and on remote jobs processed in a remote device communicatively connected to the local device, starting a job in the local device, sending information relating to the job to a remote device for the subsequent, remote processing of the job, receiving at the local device information relating to the status of processing of remote jobs at remote devices, and merging the received information into the job queue of the local device. A user at the local device may choose to manage both local and remote jobs with the same command set, such as "cancel-job".

## Description

The present technology relates to a system service, hosted on a device known as a Digital Document System (DDS) that allows management of jobs being processed both in the DDS device and remotely on other systems (e.g. servers for optical character recognition) to the DDS.

As networks have grown, the types of network devices available have likewise increased. One common type of device is a digital document system (DDS) that includes a user interface, such as a scanner, fax machine, or multi-function device (MFD) including a scanner, fax, printer, etc. A user may operate the device in order to perform tasks or jobs. Typically, the device may accept more than one job at a time. These jobs may be organized in a memory structure known as a job queue, which provides the capability to manage the jobs and the information associated with the jobs.

A user may operate the device in order to perform jobs that are local to the device - jobs that are performed within the device. For example, an MFD may be used to make copies of a document, using the scanner and printer in the MFD. A useful user interface feature is the display of the status of the local jobs that are active in the device. Such status is typically updated repeatedly during processing of each local job. This status is one type of information associated with the jobs and is handled by the information management functions of the job queue. This is a straightforward task since, for local jobs, all information relating to the job is already available within the device.

A user may also operate the device in order to transmit data from the device to one or more remote devices on the network. These recipient devices may simply receive and store the data, or they may perform processing on the data and store or transmit the results. For example, a scanner may be used to transmit data to an optical character recognition (OCR) server, which performs OCR processing and stores or transmits the recognized text. From a user standpoint, it is desirable that the device display the status of the remote jobs that originated from the device. However, prior art devices do not display the status of remote jobs. The status of the remote job during or at completion of processing of the remote job is not displayed on the user interface of the device because, for remote jobs, the information relating to the jobs is not available within the device and must be obtained from the remote device. As a result, valuable time is consumed because the user cannot get immediate feedback. For example, if the user scans a signed document that the remote server records in a database, the user must bring up a separate database application in order to confirm that the signed document was indeed stored in the database.

A need arises for a technique by which the job queue can be integrated with respect to both local and remote jobs so that the status of remote jobs associated with a networked device may be displayed on the user interface of the device.

A method, system, and computer program for handling status of remote jobs associated with a networked device, such as a digital document system (DDS), provides a job queue for the device that is integrated with respect to both local and remote jobs that originated from the device. This capability improves the user interface of the device by providing the user with information on remote job status. In the present technology, both the local and remote jobs originated from the device. Feedback of both local and remote jobs is presented to the user in a job queue at the device user interface. Here the user can perform the same operations on both local and remote jobs, such as canceling or promoting jobs. In other words jobs being processed in the device and remotely in another device, like a server, will have the same properties when presented in the job queue.

A method for handling status of remote jobs in a device comprises providing a job queue operable to include information on local jobs processed in the device and on remote jobs processed by remote devices communicatively connected to the device, starting a job in the device, sending information relating to the job to a remote device for processing of the job, receiving information relating to the status of processing of the job at the remote device, and merging the received information into the job queue of the device.

The remote device may be communicatively connected to the device by a network. The status of processing of the job at the remote device may be received at the device periodically, based on the percentage of completion of processing of the job, or based on completion of tasks in the processing of the job. The information relating to status of processing of the job at the remote device may include information relating to a time of the status, a completion percentage of processing of the job, a number of pages completed, any errors, any user actions required, or a status of the remote device. The method may further comprise displaying information based on the received information to the user. The device may be a photocopier, a xerographic photocopier, a scanner, a printer, a xerographic printer, a fax machine, a xerographic fax machine, a multi-function device, or a xerographic multi-function device.

Objects and advantages of the technology described in the present disclosure will be more clearly understood when considered in conjunction with the accompanying drawings, in which:

Fig. 1 is an exemplary diagram of a system to which the technology described in the present disclosure may be advantageously applied.

Fig. 2 is an exemplary block diagram of a system in which the technology described in the present disclosure may be implemented.

Fig. 3 is an exemplary flow diagram of a process of integration of local and remote jobs in a job queue.

Fig. 4 is a data flow diagram of data processed in the process of integration of local and remote jobs in a job queue shown in Fig 3.

Fig. 5 is an exemplary block diagram of a device in which the technology described in the present disclosure may be implemented.

Fig. 6 is an exemplary flow diagram of a processing of a user selected command directed to a remote job on a remote device.

The present technology provides display of status of remote jobs associated with a networked device, such as a digital document system (DDS). For the remainder of the document the DDS device will be referred to as "the device" or the "DDS device" or the "local device". The job queue for the device is integrated with respect to both local and remote jobs associated with the device. This capability improves the user interface of the device by providing the user with information on remote job status. Therefore, a user's workflow experience is enhanced by being given feedback of job status on remote devices.

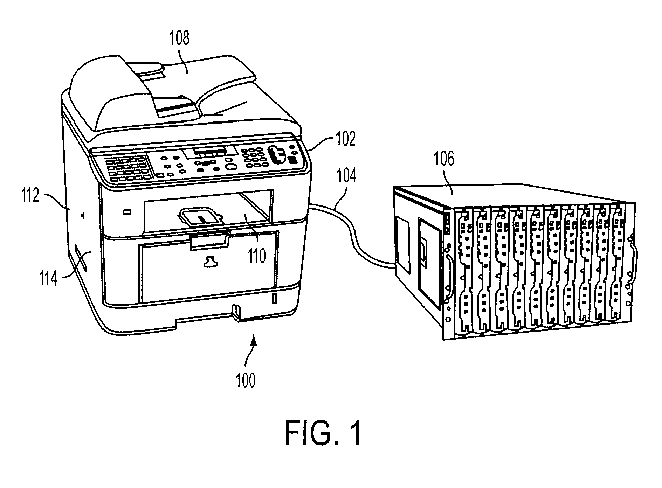

An example of a system 100, to which the present technology may be advantageously applied, is shown in Fig. 1. In the example shown in Fig. 1 a multi-function device (MFD) 102 is communicatively connected by a network 104 to one or more servers 106. In this example, MFD 102 includes functions such as scanning, printing, faxing, and copying. These functions are provided by apparatus in MFD 102, such as a scanner 108, a printer 110, and a fax modem 112. These devices are typically all controlled by a processor 114, which manages the jobs being performed by each device. In addition, MFD 102 includes network connectivity via network 104 to one or more servers, such as server 106. Server 106 may provide functions such as storage of data from MFD 102, forwarding of data from MFD 102, etc. Server 106 may also provide more processing intensive functions such are optical character recognition (OCR), etc. It improves the user's workflow experience because the user gets feedback of remote job status at the user interface of the job originating (local) device.

It is to be noted that device 102, shown in Fig. 1, is merely an example of a system to which the present technology may be advantageously applied. The present technology is not limited to this system and in fact, contemplates application to and implementation in any type of system in which information may be sent to a remote device for processing. Additional non-limiting examples of systems to which the present technology may be applied include xerographic or other photocopiers, paper handlers, document finishers, scanners, printers, fax machines, etc.

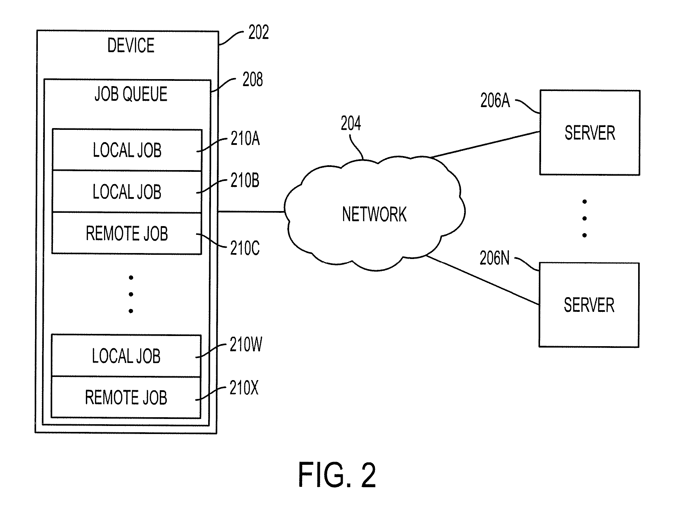

An exemplary block diagram of a system in which the present technology may be implemented is shown in Fig. 2. Device 202 is communicatively connected by network 204 to one or more remote servers 206A-N. Device 202 may be a multi-function device as shown in Fig. 1, or any other type of device that may send information to a remote device for processing, such as xerographic or other photocopiers, paper handlers, document finishers, scanners, printers, fax machines, etc. Network 204 may be any type of network or communication path that is capable of communicating information between device 202, and servers 206A-N, such as a standard local area network (LAN) or wide area network (WAN), such as Ethernet, Token Ring, the Internet, a private or proprietary LAN/WAN, a data bus, etc. Servers 206A-N are examples of remote devices that process information from devices such as device 202. These devices are remote in the sense that they communicate with device 202 through network 204; they may be physically located anywhere, such as within the same case or cabinet as device 202, in the same room, in a different room of the same building, in a different building, a different city, or anywhere in the world.

Device 202 includes job queue 208, which is a memory structure that provides the capability to manage jobs and the information associated with the jobs. This information is stored as entries 210A-X in job queue 208. Some of the jobs represented as entries in job queue 208 may be local to device 202, such as local jobs 210A, 210B, and 210W. For example, an MFD, which includes a scanner, printer, and fax, may have in its job queue local jobs including scanning jobs, printing jobs, and fax transmission and/or reception jobs. Some of the jobs represented as entries in job queue 208 may be associated with processing that is being performed in remote devices, such as servers 206A-N, such as remote jobs 210C and 210X. For example, an MFD may have in its job queue remote jobs including image processing jobs, optical character recognition jobs, etc.

It is to be noted that the networks and busses described above are merely examples of a communication paths to which the present technology may be advantageously applied. The present technology is not limited to these communication paths and contemplates application to and implementation with any type of communication path by which multiple programmable devices may be programmed.

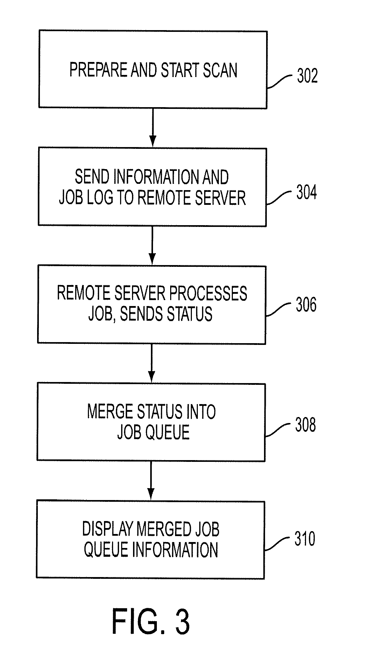

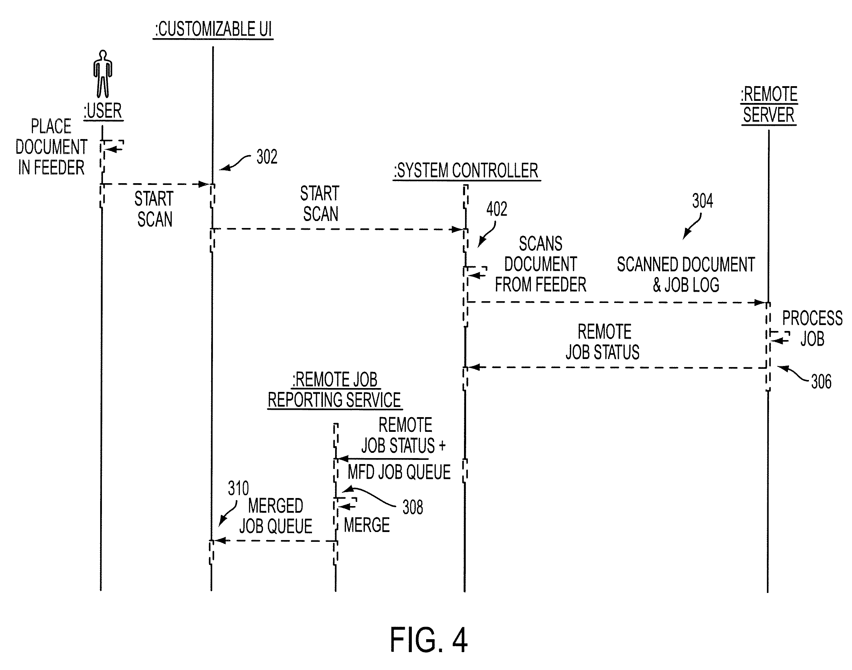

An exemplary flow diagram of a process 300 of integration of local and remote jobs in a job queue is shown in Fig. 3. It is best viewed in conjunction with Fig. 4, which is a data flow diagram of process 300. The example in Figs 3 and 4 is shown in the context of a scan performed from a scanner or MFD. However, process 300 is applicable to any system in which information is sent to a remote device for processing.

Process 300 begins with step 302, in which the user prepares and starts the scan. For example, the user may place a document in a document feeder, as shown in Fig. 4, at which time scanning may start automatically, or upon the user indicating that the scan should start, such as by pressing a button. Likewise, the user may place a document on the imaging glass, of a scanner and indicate that the scan should start, or perform some other action that initiates a job to be processed. The device then starts processing of the job. For example, in Fig. 4, the device scans the document from the document feeder 402.

In step 304, the information to be processed and the job log are sent to the remote server. For example, information to be processed may be the digital data generated by scanning the document, as in Fig. 4. The job log is information about the job associated with the scanned document, such as information about the workflow processing and information input from the user interface. The job log may include information such as the status of each step of processing of a job, values of parameters that are used to process the job, values of parameters entered at the user interface, and network authentication information. For example, the job log may indicate that the document is to be OCR'd and may specify parameters, such as those entered by the user, that affect the OCR process.

In step 306, the remote server processes the job and sends status information to the device. While status information is typically sent upon completion of processing of the job by the remote server, the present technology allows for both intermediate and final status information to be sent. Status information may be send at any time and for any reason. For example, status information may be sent periodically, such as at predefined times or time intervals, it may be sent based on the percentage of completion of processing of the job, it may be sent based on completion of tasks in the processing of the job, such as after processing of each page of a multi-page job, etc. The status information includes information identifying the job to which the status information is related, and may include information such as the time of the status, the completion percentage of processing of the job, the pages completed, any errors, any user actions required, the status of the remote server itself, etc.

In step 308, the device receives the status information from the remote server and merges it into its job queue. Since the job log may include the status of processing of the job, the status information may be used to add to or modify the information in the job log corresponding to the job. Once the status information from the remote server has been received, it is merged into the job queue and is available for display. In step 310, the merged status information in the job queue may be displayed at the device user interface. Thus, status information for jobs processed on remote devices may be displayed to the user. The invention will send the same commands to remote jobs and local jobs in the job queue (e.g. cancel job).

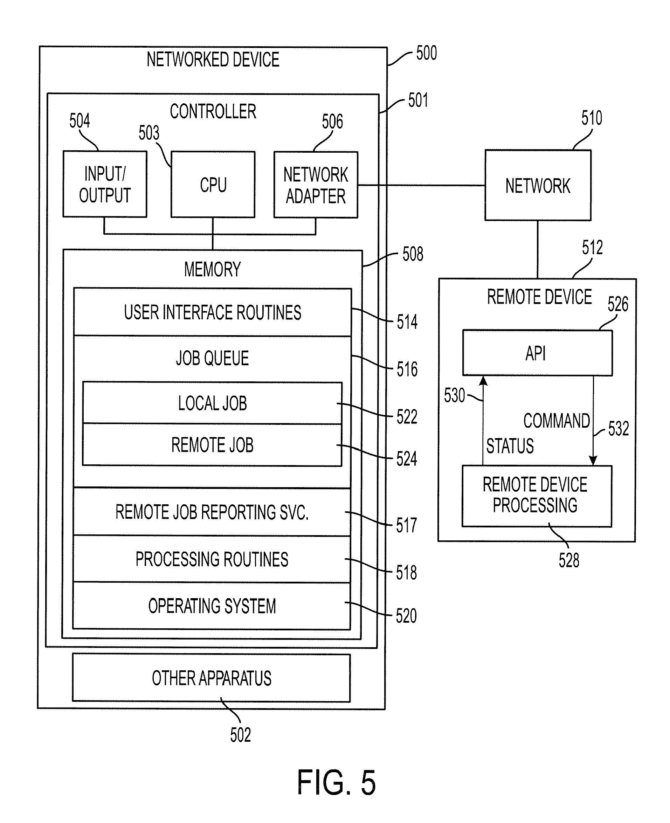

A block diagram of an exemplary networked device 500, in which the technology described in the present disclosure may be implemented, is shown in Fig. 5. Networked device 500 is typically a scanner, fax machine, printer, or multi-function device (MFD) including a scanner, fax, printer, etc. Included in networked device 500 are controller 501 and other apparatus 502. Controller 501 is typically a microcomputer system, but may be a programmed general-purpose computer system, such as a personal computer, workstation, server system, and minicomputer or mainframe computer. Controller 501 includes processor (CPU) 502, input/output circuitry 504, network adapter 506, and memory 508. CPU 502 executes program instructions in order to carry out the functions of the present technology. Typically, CPU 502 is a microcontroller, microcomputer, or microprocessor, such as an INTEL PENTIUM® processor, but may also be a minicomputer or mainframe computer processor. Although in the example shown in Fig. 5, computer system 500 is a single processor computer system, the present technology contemplates implementation on a system or systems that provide multi-processor, multi-tasking, multi-process, multi-thread computing, distributed computing, and/or networked computing, as well as implementation on systems that provide only single processor, single thread computing. Likewise, the present technology also contemplates embodiments that utilize a distributed implementation, in which computer system 500 is implemented on a plurality of networked computer systems, which may be single-processor computer systems, multi-processor computer systems, or a mix thereof.

Input/output circuitry 504 provides the capability to input data to, or output data from, computer system 500. For example, input/output circuitry may include input devices, such as keyboards, mice, touchpads, trackballs, scanners, etc., output devices, such as video adapters, monitors, printers, etc., and input/output devices, such as, modems, etc. Network adapter 506 interfaces computer system 500 with network 510. Network 510 may be any standard local area network (LAN) or wide area network (WAN), such as Ethernet, Token Ring, the Internet, or a private or proprietary LAN/WAN. Network 510 provides communicative connection with remote device 512.

Memory 508 stores program instructions that are executed by, and data that are used and processed by, CPU 502 to perform the functions of the present technology. Memory 508 may include electronic memory devices, such as random-access memory (RAM), read-only memory (ROM), programmable read-only memory (PROM), electrically erasable programmable read-only memory (EEPROM), flash memory, etc., and electro-mechanical memory, such as magnetic disk drives, tape drives, optical disk drives, etc., which may use an integrated drive electronics (IDE) interface, or a variation or enhancement thereof, such as enhanced IDE (EIDE) or ultra direct memory access (UDMA), or a small computer system interface (SCSI) based interface, or a variation or enhancement thereof, such as fast-SCSI, wide-SCSI, fast and wide-SCSI, etc, or a fiber channel-arbitrated loop (FC-AL) interface.

Memory 508 includes user interface routines 514, job queue 516, Remote Job Reporting Service 517, processing routines 518, and operating system 520. User interface routines 514 perform processing that accepts input from a user of networked device 500 and displays information to the user. Job queue 516 is a memory structure that provides the capability to manage jobs and the information associated with the jobs. This information is stored as entries in job queue 516. Some of the jobs represented as entries in job queue 516 may be local to device 500, such as local job 522. Some of the jobs represented as entries in job queue 516 may be associated with processing that is being performed in remote devices, such as remote device 512, such as remote job 524. Remote Job Reporting Service 517 receives status of remote jobs on remote device 512 and integrates them into the local device's job queue 516, and forwards commands for remote jobs on remote device 512 from remote job entries in the local device's job queue 516 to remote device 512. Processing routines 518 perform processing that provide the functions of networked device 500, such as printing functions, scanning functions, and/or faxing functions. Operating system 512 provides overall system functionality.

Other apparatus 502 includes other circuitry, electro-mechanical devices, and/or mechanical devices that may be included in networked device 500. Other apparatus 502 may be controlled by controller 501, other controllers in networked device 500, other circuitry in networked device 500, and/or other mechanical devices in networked device 500. For example, other apparatus 502 may include printing circuitry and mechanisms, scanning circuitry and mechanisms, and/or faxing circuitry and mechanisms.

Remote device 512 includes application programming interface (API) 526 and remote device processing 528. API 526 provides remote devices, such as remote device 512, with the capability to report status of jobs being processed by the remote device back to the local networked device 500. Remote device processing 528 is processing performed in remote device 512 that corresponds to remote job 524. Status 530 generated by remote device processing 528 may be communicated over network 510 to networked device 500 using software routines provided by API 526. Once received by networked device 500, a service is invoked (i.e. Remote Job Reporting Service) which merges the remote job status 530 into job queue 516 similarly to job status of jobs being performed locally at networked device 500. The software routines implementing the API 526 utilized by the remote device, 512, packages the status in such a way that it can be consumed by the Remote Job Reporting Service on the networked device 500. For example, remote job status 530 may be handled by remote job entry 524 in job queue 516. Likewise, a user may select a remote job, such as remote job 514, from job queue 516 and send a command relating to that job from networked device 500 to remote device 512. The Remote Job Reporting Service will forward the command to the remote device 512, where API 526 will handle reception of the command and transmit the command 532 to remote device processing 528. Since both local and remote jobs are integrated into job queue 516, from the user's point of view, commands that may be sent to remote jobs on remote device 512 will appear to be identical to or equivalent to commands that are sent to local jobs on networked device 500.

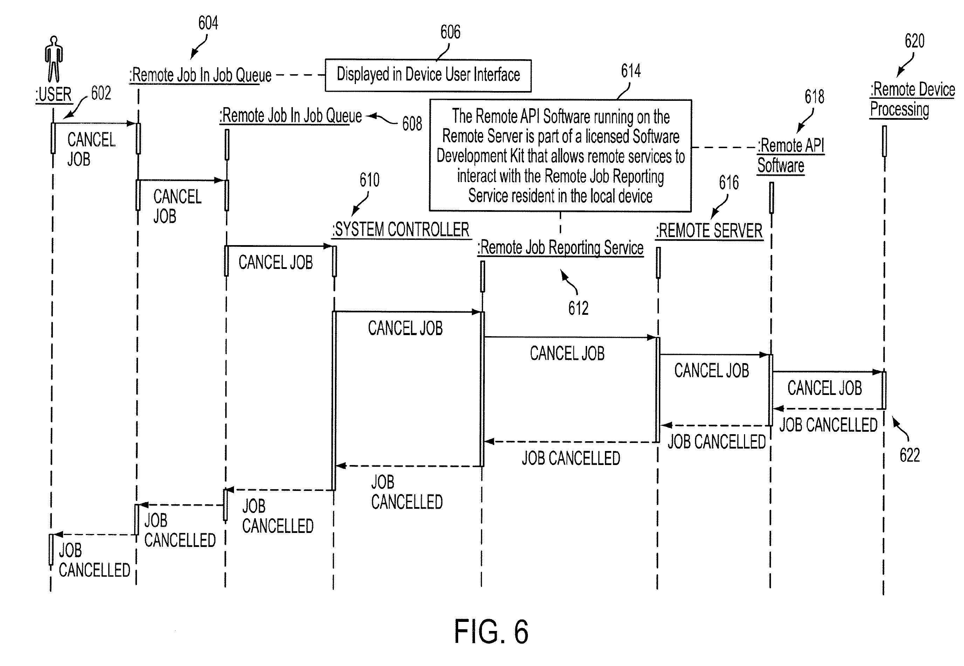

An example of the processing of a user selected command directed to a remote job on a remote device is shown in Fig. 6. It is best viewed in conjunction with Fig. 5. In step 602, a user selects a command directed to a remote job entry in the job queue displayed in the local devices job queue that corresponds to a job being processed on a remote device 512. For example, the user may issue a "Cancel Job" command, as exemplified in Fig. 6. The cancel job command is transmitted 604 to the remote job entry 524 in job queue 516. The invocation of the command may be displayed 606 in the user interface of networked device 500. The command (or information relating to the command) is then transmitted 608 from the remote job entry 524 in job queue 516 to a system controller process, which handles processing of the command. The system controller process transmits 610 the command to the Remote Job Reporting Service 517. The Remote Job Reporting Service 517 interacts 614 with API 526 to communicate 616 the command to remote device (server) 512, as handled by API 526. Using API 526, the command 532 is transmitted 618 to remote device processing 528, where the command is executed 620. The status 530 of the remote job (such as the status of performance of command 532) may then be transmitted 622 back to networked device 500, where the status is merged into job queue and may be displayed.

In the following, additional preferred embodiments will be described:
According to a preferred embodiment of the method, the local device is a photocopier, a xerographic photocopier, a scanner, a printer, a xerographic printer, a fax machine, a xerographic fax machine, a multi-function device, or a xerographic multi-function device.
According to a preferred embodiment of the apparatus, the status of processing of the job at the remote device is received at the local device periodically, based on the percentage of completion of processing of the job, or based on completion or failure of tasks in the processing of the job.
According to a further preferred embodiment of the apparatus, the information relating to status of processing of the job at the remote device includes information relating to a time of the status, a completion percentage of processing of the job, a number of pages completed, any errors, any user actions required, or a status of the remote device.
According to a further preferred embodiment of the apparatus, the apparatus further comprises displaying information relating to the remote job to the user based on the received information.
Furthermore, it is preferred that in the application programming interface, the status of processing of the job at the remote device is received at the local device periodically, based on the percentage of completion of processing of the job, or based on completion of tasks in the processing of the job.
Furthermore, it is preferred that in the application programming interface, the information relating to status of processing of the job at the remote device includes information relating to a time of the status, a completion percentage of processing of the job, a number of pages completed, any errors, any user actions required, or a status of the remote device.
Furthermore, it is preferred that in the application programming interface, the information relating to the remote job may be displayed to the user at the local device.
According to a further preferred embodiment, the service of the apparatus further comprises:
   program instructions executable by a processor to accept a command selected by a user of the local device and to transmit the command to the application programming interface on the remote device for transmission to the remote job being processed at the remote device, wherein the command originating from the user is a selection of a remote job from the job queue of the local device, and wherein, to the user, the command is identical to or equivalent to a command that may be sent to a local job at the local device.
According to a further preferred embodiment of the service of the apparatus, the status of processing of the job at the remote device is received at the local device periodically, based on the percentage of completion of processing of the job, or based on completion of tasks in the processing of the job and the service merges the status of the remote job in the local device's job queue for display on the user interface.
According to a further preferred embodiment of the service of the apparatus, the information relating to status of processing of the job at the remote device includes information relating to a time of the status, a completion percentage of processing of the job, a number of pages completed, any errors, any user actions required, or a status of the remote device.

## Claims

1. A method for handling status of remote jobs in a local device comprising:
providing a job queue operable to include information on local jobs processed in the local device and on remote jobs processed in a remote device communicatively connected to the local device;
starting a job in the local device;
sending information relating to the job to a remote device for processing of the job;
receiving at the local device information relating to status of processing of the remote job at the remote device; and
merging the received information into the job queue of the local device.

2. The method of claim 1, further comprising:
accepting from the user a selection of a remote job from the job queue, and sending a command from the local device to the remote job being processed at the remote device, wherein, to the user the command is identical to or equivalent to a command that may be sent to a local job at the local device.

3. The method of claim 1, wherein the status of processing of the job at the remote device is received at the local device periodically, based on the percentage of completion of processing of the job, or based on completion or failure of tasks in the processing of the job.

4. The method of claim 3, wherein the information relating to status of processing of the job at the remote device includes information relating to a time of the status, a completion percentage of processing of the job, a number of pages completed, any errors, any user actions required, or a status of the remote device.

5. Apparatus for handling status of remote jobs in a local device comprising:
a processor operable to execute computer program instructions;
a memory operable to store computer program instructions executable by the processor; and
computer program instructions stored in the memory and executable to perform the steps of:
providing a job queue operable to include information on local jobs processed in the local device and on remote jobs processed in a remote device communicatively connected to the local device;
starting a job in the local device;
sending information relating to the job to a remote device for processing of the job;
receiving at the local device information relating to status of processing of the job at the remote device; and
merging the received information into the job queue of the local device.

6. The apparatus of claim 5, further comprising instructions for performing the step of:
accepting from the user a selection of a remote job from the job queue, and sending a command from the local device to the remote job being processed at the remote device, wherein, to the user the command is identical to or equivalent to a command that may be sent to a local job at the local device.

7. An application programming interface for a remote device comprising a remote job and providing communications between the remote device and a local device comprising a job queue and a service operable to merge remote job status into the job queue, wherein the job queue is operable to include information on local jobs processed in the local device and on remote jobs processed in a remote device communicatively connected to the local device, wherein the remote device comprises a job being processed that was initiated at the local device and sent to the remote device; and the application programming interface comprises:
program instructions executable by a processor to receive information relating to a status of the job being processed that was initiated at the local device and sent to the remote device; and
program instructions executable by a processor to transmit the information relating to the status of the job to the service of the local device for merging of the information into the job queue of the local device.

8. The application programming interface of claim 7, further comprising:
program instructions executable by a processor to accept a command sent by the service of the local device and to transmit the command to the remote job being processed at the remote device, wherein the command originating from the user is a selection of a remote job from the job queue of the local device, and wherein, to the user, the command is identical to or equivalent to a command that may be sent to a local job at the local device.

9. The application programming interface of claim 7, wherein the remote device is communicatively connected to the local device by a network.

10. Computer executable program code for a local device comprising a job queue and providing communications between a remote device and the local device, wherein the job queue is operable to include information on local jobs processed in the local device and on remote jobs processed in a remote device communicatively connected to the local device, wherein the remote device comprises a job being processed that was initiated at the local device and sent to the remote device; and the program code comprises:
program instructions executable by a processor to receive information from an application programming interface on the remote device, the information relating to a status of the job being processed that was initiated at the local device and sent to the remote device; and
program instructions executable by a processor to and merge the remote job status into the job queue of the local device.
